# DEMANDE DE BREVET EUROPEEN

(11) **EP 0 945 827 A1**
(43) Date de publication de la demande: **29.09.1999**
(21) Numéro de dépôt: 99400434.9
(22) Date de dépôt: 23.02.1999
(51) Int. Cl.: G06K 19/067, A44C 5/00

(54) **Bracelet comportant des moyens pour son identification**

(30) Priorité: 09.03.1998 FR 9802839
(71) Demandeur: Finaluxe, 75116 Paris (FR)
(72) Inventeur: Dechery, Jean-Luc, 75016 Paris (FR); Salavert, Didier, 75116 Paris (FR); Bonnoit, Alain, 91192 Gif sur Yvette (FR)
(74) Mandataire: Casalonga, Axel

(57) **Abrégé**

Dispositif de bracelet 4 destiné à être porté au poignet comprenant des moyens pour identifier le dit bracelet incluant une étiquette électronique.

## Description

La présente invention relève du domaine des bracelets, notamment en cuir ou en d'autres matériaux, et pouvant être associé à un boîtier de montre ou tout autre élément que l'on souhaite porter au poignet.

Dans le domaine des bracelets de montre en cuir, le détaillant dont le travail consiste à effectuer le remplacement d'un bracelet usé par un nouveau bracelet est confronté à un problème d'identification du bracelet usé pour le remplacer par un bracelet du même type. En effet, on utilise couramment une soixantaine de cuirs différents et une centaine de couleurs différentes. Le détaillant éprouve donc des difficultés à reconnaître le modèle exact de bracelet et ce d'autant plus que l'aspect extérieur de celui-ci peut avoir été altéré par l'usure.

On connaît par le document FR-A-2731531 une montre-bracelet comportant un boîtier dans lequel sont disposés des moyens de réception et/ou d'émission d'ondes électromagnétiques contenant par exemple des informations horaires. Ces moyens de réception et/ou d'émission sont constitués d'une antenne formée d'un support en matière synthétique isolante sur lequel est enroulé un fil électrique conducteur isolé. L'antenne est placée dans l'évidement intérieur entre une carrure et une lunette de la montre. Cette montre peut être remise à l'heure automatiquement grâce à ce système. Toutefois, un tel système modifie de façon importante la structure interne de la montre.

On connaît également une méthode d'identification optique dans laquelle on utilise une caméra couleur, un système d'acquisition d'images et un système informatique permettant d'effectuer un traitement de l'information afin d'identifier le bracelet. Toutefois l'identification du type de cuir risque d'être rendue difficile à cause de l'usure du bracelet. Le système d'identification nécessiterait de grandes précautions d'utilisation à cause du système optique.

Par ailleurs, on cherche à pouvoir différencier les bracelets en provenance du fabricant d'origine et les bracelets qui en constituent une copie.

La présente invention a pour objet de proposer un bracelet qu'un détaillant peut reconnaître de façon simple et qui puisse être différencié des copies existantes sur le marché.

Le dispositif de bracelet, selon l'invention, est destiné à être porté au poignet. Il comprend des moyens d'identification à distance dudit bracelet incluant une étiquette électronique. Une telle étiquette électronique est capable de stocker différentes informations telles qu'un numéro de série du bracelet, un numéro d'identification du type de bracelet, la date de fabrication etc. On entend par informations relatives au bracelet également les informations concernant son propriétaire.

Dans un mode de réalisation de l'invention, le bracelet comprend des moyens de fixation sur un boîtier, par exemple de montre ou sur un appareil de communication.

L'étiquette électronique peut comprendre des moyens de lecture et des moyens d'écriture aptes à modifier les informations stockées dans ladite étiquette.

Dans un mode de réalisation de l'invention, les moyens d'identification du bracelet comprennent un circuit électronique intégré et une antenne noyée dans une partie du bracelet. Ainsi, les moyens d'identification n'altèrent pas l'aspect extérieur du bracelet et restent discrets. Le circuit électronique peut être disposé à proximité de moyens de fixation sur un boîtier, par exemple de montre.

La zone du bracelet à proximité du boîtier est en effet moins soumise aux contraintes de torsion en raison de la présence d'une articulation généralement disposée entre le bracelet et le boîtier. Le circuit électronique est ainsi mieux préservé.

L'antenne comprend une bobine de fils conducteurs de forme plate et allongée. L'antenne conserve ainsi la souplesse nécessaire pour s'adapter à la forme du bracelet. La bobine peut être disposée entre le circuit électronique et des moyens d'attachement sur une autre partie de bracelet. La bobine et le circuit électronique sont disposés dans la même partie de bracelet. La bobine peut être de longueur inférieure ou égale à 35mm et de largeur inférieure ou égale à 3mm. Dans le cas d'un bracelet en cuir, une telle bobine de faible largeur peut être disposée entre les deux couches de cuir formant le bracelet et entre les coutures reliant lesdites deux couches de cuir sur le rebord, y compris dans le cas d'un bracelet pour femme de faible largeur.

Dans un mode de réalisation de l'invention, le circuit électronique comprend des moyens de cryptage, des moyens de conversion de l'énergie récupérée par l'antenne pour assurer l'alimentation électrique du circuit et une mémoire permanente. Lors de la fabrication des bracelets on peut charger les informations que l'on souhaite conserver, en faisant passer le bracelet, en fin de fabrication, dans un appareil capable, par émission d'un champ magnétique, de stocker les informations dans la mémoire du circuit électronique. Cette étape peut être réalisée de façon entièrement automatisée.

On dispose ainsi d'un moyen d'identification d'un bracelet associé à une montre, un téléphone portable, ou tout autre objet devant être porté au poignet, sans modification de l'aspect extérieur du bracelet et moyennant un coût très faible.

La présente invention a également pour objet un système de commande comprenant un dispositif de bracelet tel que décrit ci-dessus et un moyen de lecture/écriture des moyens d'identification du bracelet pour la commande à distance d'un circuit. Le bracelet peut ainsi faire l'objet d'opérations de lecture/écriture à distance, par exemple pour commander un actionneur, un contacteur ou un moteur. Avantageusement, le circuit commande des moyens de contrôle d'accès à un local, un espace clos ou ouvert, une installation ou un véhicule.

Le bracelet permet une gestion de la fabrication, une passation de la commande d'un bracelet de remplacement sans erreur possible, et un suivi des stocks plus aisés, une meilleure connaissance du client qui peut déboucher sur des opérations de marketing plus ciblées, et un meilleur repérage des circuits de contrefaçon et des bracelets volés. On peut, par exemple, proposer au client le remplacement de son bracelet au bout d'un période d'utilisation déterminée.

La présente invention sera mieux comprise à l'étude de la description détaillée d'un mode de réalisation pris à titre d'exemple nullement limitatif et illustré par les dessins annexés, sur lesquels :
la figure 1 est une vue schématique d'un bracelet de montre selon l'invention ; et
la figure 2 est un schéma du circuit électronique utilisé.

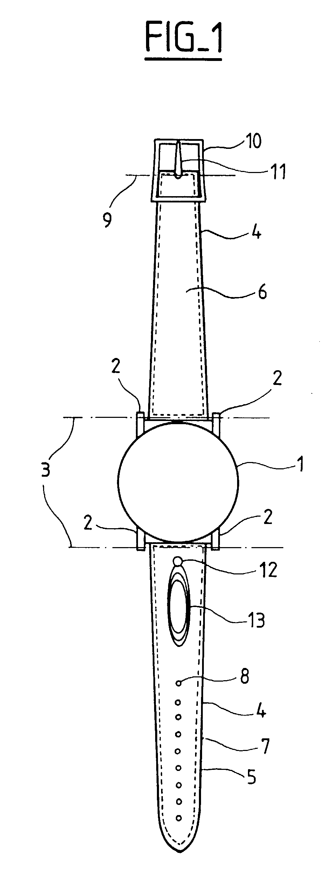

Comme on peut le voir sur la figure 1, la montre comprend un boîtier 1 de forme ronde mais qui pourrait être de tout autre forme, rectangulaire, hexagonale, octogonale etc. Deux paires de chapes 2 sont disposées de part et d'autre du boîtier 1, chaque paire de chapes 2 étant associée à un axe 3 représenté en traits mixtes.

Un bracelet 4 comprend une première partie 5 et une deuxième partie 6. La première partie 5 est montée à pivotement autour d'un axe 3 entre deux chapes 2 et est réalisée au moyen de deux couches de cuir reliées au moyens d'une couture 7. Sur la figure 1 seule la couche supérieure de cuir est visible. A l'extrémité de la première partie 5 opposée au boîtier 1, le cuir est percé d'une pluralité de trous 8 alignés dans le sens de la longueur de la première partie 5 et prévus pour coopérer avec la deuxième partie 6. A titre de variante, on peut prévoir un bracelet en une seule partie formant une lanière.

La deuxième partie 6 est semblable à la première partie 5 à ceci près que son extrémité opposée au boîtier est associée à un axe 9 représenté en traits mixtes. Sur l'axe 9 est articulée une boucle 10 et un ardillon 11. L'ardillon 11 est prévu pour venir en saillie dans l'un des trous 8 dans la première partie 5, la première partie 5 venant se bloquer dans la boucle 10. L'attachement entre les deux parties de bracelet peut aussi être réalisé par une boucle déployante.

La première partie 5 du bracelet 4 est équipée d'une puce électronique 12 disposée entre les deux couches de cuir, sensiblement au milieu de la largeur dudit bracelet 4 entre les coutures 7 et à proximité du boîtier 1. En effet, la zone de la première partie 5 proche du boîtier 1 est moins soumise aux déformations que la la zone éloignée dudit boîtier 1.

La puce électronique 12 est connectée à une antenne se présentant sous la forme d'une bobine 13 qui s'étend entre la puce électronique 12 et le premier de la série de trous 8 dans la première partie 5 entre les deux couches de cuir et entre les deux coutures 7. La bobine 13 peut être réalisée en fil de cuivre isolé par exemple d'un diamètre de 150µm. La bobine ne s'étend pas dans la zone de la première partie 5 où sont prévus les trous 8 en raison du risque de sectionnement d'un fil lors du percement des trous 8. A titre de variante, la puce électronique 12 peut être disposée dans la deuxième partie 6.

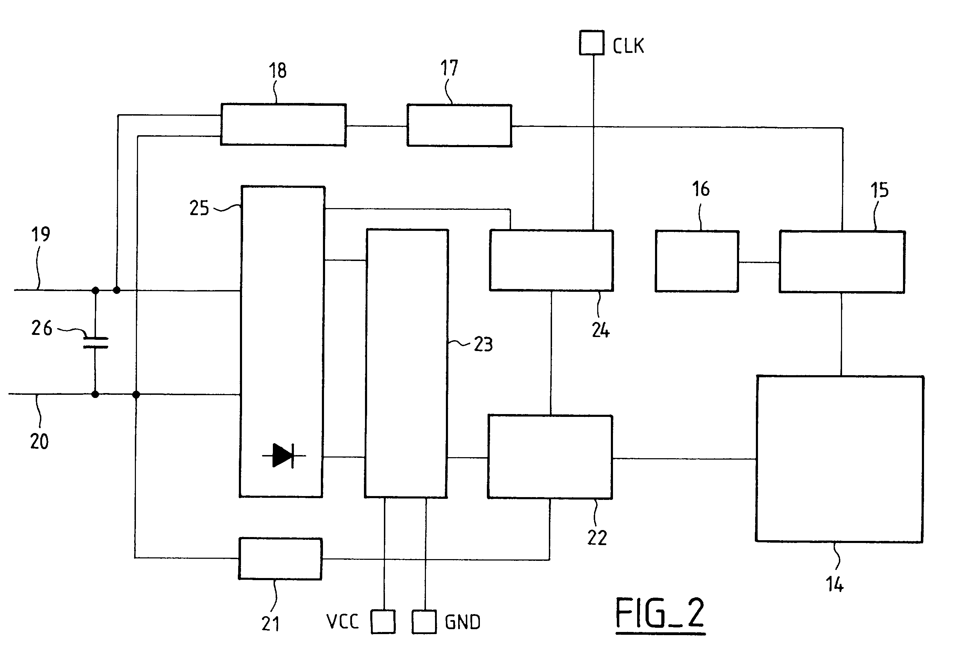

Comme on peut le voir sur la figure 2, la puce électronique, par exemple un microcontrôleur, comprend une mémoire morte 14 reliée à un bloc de cryptage 15 lui-même relié à un générateur de nombre aléatoire 16 servant au cryptage et à un encodeur 17. L'encodeur 17 est relié à un modulateur 18 lui-même connecté aux deux fils d'entrée 19 et 20 de la puce 12 qui sont reliés à la bobine 13 de la figure 1. Les moyens de cryptage 15 et 16, l'encodeur 17 et le modulateur 18 constituent les moyens d'écriture dans la mémoire morte 14, ces moyens d'écriture étant actifs lorsqu'un signal électromagnétique correspondant est capté par la bobine 13.

La puce 12 comprend également un décodeur 21 relié au modulateur 18, au fil d'entrée 20 et à une unité de sécurité 22. L'unité de sécurité 22 est connectée à la mémoire morte 14 à un bloc de commande de puissance 23 et à une interface 24. La puce 12 comprend un convertisseur alternatif-continu 25 relié aux fils d'entrée 19 et 20 pour transformer la tension alternative existant entre les fils 19 et 20 en une tension continue capable d'alimenter l'ensemble des composants de la puce 12. Entre les fils 19 et 20, est disposée une capacité 26 qui forme avec la bobine 13, un circuit résonant. Le convertisseur 25 est relié au bloc de commande de puissance 23 à partir duquel sont prévues la ligne de tension positive VCC et la ligne de terre GND.

L'unité de sécurité 22 est reliée au bloc de commande de puissance 23 qui assure la régulation de la tension d'alimentation. L'interface 24 est relié au convertisseur 25 pour pouvoir générer un signal d'horloge CLK dont la fréquence dépend de celle du signal reçu.

La puce électronique permet donc à partir du signal délivré par l'antenne constituée par la bobine 13 d'alimenter l'ensemble des éléments de la puce électronique, de décoder l'information reçue par l'antenne à la réception de l'onde électromagnétique pour une opération d'écriture dans la mémoire 14 et de coder une information en provenance de la mémoire 14 pour transmettre vers un lecteur une information lors d'une opération de lecture de ladite mémoire 14.

Ainsi, un détaillant équipé d'un lecteur adapté pour la puce électronique 12 et comprenant notamment une antenne pourra effectuer une lecture d'informations présentes dans la mémoire 14, le lecteur pouvant être disposé à une distance de quelques centimètres du bracelet. Cette information peut être transférée au moyen d'un codage approprié vers un micro-ordinateur sur lequel s'affichera, par exemple les caractéristiques du bracelet devant être commandé. Cette information peut être transférée au fabricant de bracelet qui pourra ainsi en effectuer la livraison rapidement. Les moyens de cryptage 15, 16 garantissent que l'écriture dans la mémoire 14 n'est autorisée que si l'on connaît un code. Le fabricant de bracelet peut ainsi conserver ce code secret et n'autoriser un détaillant qu'à effectuer la lecture de la mémoire 14. Le lecteur utilisé par le détaillant est alors simplifié dans la mesure où il n'est pourvu que d'un moyen de lecture. Le lecteur doit émettre un signal assez puissant pour alimenter la puce 12 tout en permettant la lecture de la mémoire 14.

On choisira de faire fonctionner l'antenne 13 à une fréquence de l'ordre de 13,6MHz de façon à utiliser une antenne de dimension réduite. On pourra choisir une antenne comportant six tours et d'inductance égale à 1,5µH. On utilisera de préférence un fil de cuivre d'un diamètre de 150µ. Toutefois on pourra envisager un fil de diamètre compris entre 100 et 200µ tout en conservant une épaisseur de l'antenne et de la puce inférieure à 0,5mm. Bien entendu, l'inductance de l'antenne sera adaptée à la capacité d'entrée de l'étage analogique du circuit intégré.

On pourrait aussi envisager d'augmenter la fréquence de la porteuse du signal pour réduire la surface de l'antenne. Si la fréquence du signal est multipliée par N, la surface de l'antenne peut approximativement être réduite dans le même rapport. Pour conserver des circuits intégrés passifs fonctionnant à la fréquence de 13,6MHz, on pourrait modifier la partie analogique du circuit intégré dans le but d'augmenter la fréquence du signal.

Grâce à l'invention, on dispose d'un bracelet pourvu de moyens d'identification invisibles à l'oeil nu, résistant à la déformation, la torsion longitudinale et la torsion latérale du bracelet, et convenablement protégé contre des chocs ou des agressions mécaniques externes. Bien entendu, on prévoira une connexion entre l'antenne et la puce électronique capable de résister aux colles habituellement utilisées dans les bracelets de montre.

On pourra stocker dans la puce électronique des informations relatives au fournisseur, au modèle, à la matière et aux couleurs, à la longueur de la première et de la deuxième partie du bracelet, à l'assemblage, à la boucle, à la taille, à la doublure du bracelet, à la couleur du fil de couture, à la finition, au mois et à l'année de fabrication et à un numéro individuel d'identification qui peut permettre de connaître le client. Le bracelet peut être en une ou en deux parties, en cuir, en métal ou en d'autres matériaux. Un tel bracelet offre des avantages considérables pour la gestion des stocks, tant chez le détaillant que chez le fabricant ou le grossiste de bracelets, de montres ou d'autres appareils incluant le bracelet. Il facilite le suivi de la clientèle, la lutte contre les copies illicites et la lutte contre le vol. Il permet également de garantir au client qu'un bracelet de remplacement est bien conforme au bracelet original.

## Revendications

1. Dispositif de bracelet (4) destiné à être porté au poignet, caractérisé par le fait qu'il comprend des moyens d'identification à distance dudit bracelet incluant une étiquette électronique capable de stocker des informations relatives au bracelet, et une antenne noyée dans une partie du bracelet, l'étiquette électronique comprenant des moyens de conversion de l'énergie récupérée par l'antenne pour assurer l'alimentation électrique du circuit.

2. Dispositif selon la revendication 1, caractérisé par le fait qu'il comprend des moyens de fixation sur un boîtier de montre (1).

3. Dispositif selon la revendication 1, caractérisé par le fait qu'il comprend des moyens de fixation sur un appareil de communication.

4. Dispositif selon l'une quelconque des revendications précédentes, caractérisé par le fait que l'étiquette électronique comprend des moyens de lecture et des moyens d'écriture.

5. Dispositif selon l'une quelconque des revendications précédentes, caractérisé par le fait que les moyens d'identification du bracelet comprennent un circuit électronique intégré (12) noyé dans une partie du bracelet.

6. Dispositif selon la revendication 5, caractérisé par le fait que le circuit électronique est disposé à proximité de moyens de fixation sur un boîtier.

7. Dispositif selon la revendication 5 ou 6, caractérisé par le fait que l'antenne comprend une bobine de fil conducteur de forme plate et allongée.

8. Dispositif selon la revendication 7, caractérisé par le fait que la bobine est disposée entre le circuit électronique et des moyens de d'attachement sur une autre partie de bracelet.

9. Dispositif selon la revendication 7 ou 8, caractérisé par le fait que la bobine fait 35 mm de longueur au maximum et 3 mm de largeur au maximum.

10. Dispositif selon l'une quelconque des revendications précédentes, caractérisé par le fait que le circuit électronique comprend des moyens de cryptage, et une mémoire permanente.

11. Système de commande comprenant un dispositif selon l'une quelconque des revendications précédentes et un moyen de lecture/écriture des moyens d'identification du bracelet pour la commande à distance d'un circuit.

12. Système selon la revendication 11, caractérisé par le fait que le circuit comprend un actionneur, un contacteur, ou un moteur.

13. Système selon la revendication 11 ou 12, caractérisé par le fait que le circuit commande des moyens de contrôle d'accès à un local, un espace clos ou ouvert, une installation ou un véhicule.
